# EUROPEAN PATENT SPECIFICATION

(11) **EP 2 267 575 B1**
(45) Date of publication and mention of the grant of the patent: **19.12.2012**
(21) Application number: 09172891.5
(22) Date of filing: 13.10.2009
(51) Int. Cl.: G06F 1/32

(54) **Electronic device for reducing power consumption of computer motherboard and motherboard thereof**
Elektronische Vorrichtung zur Verringerung des Energieverbrauchs einer Computerhauptplatine und Hauptplatine damit
Dispositif électronique pour réduire la consommation de puissance d'une carte mère d'ordinateur et carte mère correspondante

(30) Priority: 25.06.2009 US 491530
(43) Date of publication of application: 29.12.2010
(73) Proprietor: Micro-Star International Co., Ltd., Jung-Ho City, Taipei Hsien (TW)
(72) Inventor: Chen, Chung-Wen, Taipei Taiwan (TW); Yeh, Chun-Te, Taipei Taiwan (TW)
(74) Representative: Viering, Jentschura & Partner

(56) References cited:
- US-A1- 2002 194 512
- US-A1- 2009 106 573
- US-A1- 2009 132 798
- US-B2- 7 103 785

## Description

### FIELD OF THE INVENTION

The present invention relates to power-saving computer motherboards, and more particularly, to a computer motherboard capable of executing Wake-on-LAN (WOL) function while compelling interruption of power supply to a south bridge chip and a super input output (SIO) chip in a power-saving state.

### BACKGROUND OF THE INVENTION

Upon its entry into a standby/sleep mode, such as an S3 state of Advanced Configuration and Power Interface (ACPI) (hereinafter referred to as ACPI S3), that is, a "suspend to memory" or an S5 power-off state, or upon its entry into a standby/sleep mode that involves waiting for receipt of a Wake-on-LAN (WOL) packet, a conventional computer motherboard begins to operate in a standby power-saving mode, but some of the chips of the conventional computer motherboard, such as a south bridge chip, a north bridge chip, and a super input output (SIO) chip, continue to consume power, and even the CPU cannot stop consuming power, and in consequence reduction of power consumption is not efficient at all. To save power, it is necessary to minimize the power consumption of power-consuming parts and components of the conventional computer motherboard one by one or even bring the power-consuming parts and components to a sleep mode in a program-controllable manner for power saving. However, with the south bridge chip being in control of ACPI and the SIO chip being in control of startup and shutdown, neither the south bridge chip nor the SIO chip can be shut down while in the "suspend to memory" state. Computer motherboards are designed, depending on chipsets for use therewith. Likewise, parts and components of computer motherboards are controlled differently. Hence, it is slow and laborious to develop a computer motherboard whose power-consuming parts and components can be brought to a power-saving mode or a sleep mode one by one, not to mention that a computer motherboard thus developed is intricate, expensive, and incompatible with parts and components of variant design.

US6,266,776, entitled ACPI Sleep Control, discloses: when the state of an internal battery or an external power supply changes, the change is detected by an embedded controller; the operating system is informed of this change using a power management event signal POWER_PME and an SCI interrupt; and in accordance with the change in power supply state by the internal battery or the external power supply, the current system state changes to another system state. However, US6,266,776 does not disclose that power saving can be implemented by interrupting power supply to a south bridge chip and a SIO chip of a computer motherboard in ACPI S3 and S5 or in a standby/sleep mode that involves waiting for receipt of a Wake-on-LAN packet.

US 7 103 785 B2 (GREEN ALAN M [US] ET AL) 5 September 2006 (2006-09-05) discloses an electronic device for reducing power consumption of a computer motherboard having a network chip electrically connected to a standby power originating from a power source. A gate 209 controlled by a flip-flops 201, 203 and gate 205 is configured to controllably determine whether the standby power forms a close circuit or an open circuit with a super input output (SIO) chip 123 of the computer motherboard. Said flip-flops 201, 203 and gate 205 determine whether the computer motherboard receives a signal from the network chip NIC PME on line 125 so as for the standby power to form a close circuit with the SIO chip 123 under control of the gate 209 upon a positive determination and, upon the positive determination, send a simulated power switch signal 209c to the SIO chip so as to enable start-up of the computer motherboard. Thus when a special packet is sent to the computer and recognized by the network chip, the SIO chip is notified that the computer should wake up from the sleep mode.

The inventor of the present invention realized the drawbacks of the conventional computer motherboard and endeavored to overcome the drawbacks by inventing an electronic device for reducing power consumption of a computer motherboard capable of executing Wake-on-LAN (WOL) function while compelling interruption of power supply to a south bridge chip and a super input output (SIO) chip in a power-saving state.

### SUMMARY OF THE INVENTION

It is an objective of the present invention to provide an electronic device for reducing power consumption of a computer motherboard and a computer motherboard equipped with the electronic device so as to reduce power consumed by the computer motherboard while waiting for receipt of a Wake-on-LAN (WOL) packet.

Another objective of the present invention is to provide an electronic device or reducing power consumption of a computer motherboard and a computer motherboard equipped with the electronic device such that the computer motherboard is capable of executing Wake-on-LAN (WOL) function while compelling interruption of power supply to a south bridge chip and a super input output (SIO) chip in a power-saving state.

The invention provides an electronic device and a motherboard as set out in claims 1 and 10, respectively.

To achieve the above and other objectives, the present invention provides an electronic device for reducing power consumption of a computer motherboard having a network chip electrically connected to a standby power originating from a power source, comprising: a first device controlled by a second device and configured to controllably determine whether the standby power forms a close circuit or an open circuit with a south bridge chip and a super input output (SIO) chip of the computer motherboard; and the second device for determining whether the computer motherboard receives a signal from the network chip so as for the standby power to form a close circuit with the south bridge chip and the SIO chip under control of the first device upon a positive determination and, upon the positive determination, sending a simulated power switch signal to the SIO chip so as to enable startup of the computer motherboard.

To achieve the above and other objectives, the present invention further provides a computer motherboard, comprising: a network chip electrically connected to a standby power originating from a power source; a south bridge chip electrically connected to a first device; a super input output (SIO) chip electrically connected to the first device; the first device controlled by a second device and configured to controllably determine whether the standby power forms a close circuit or an open circuit with the south bridge chip and the SIO chip; and the second device for determining whether the computer motherboard receives a signal from the network chip so as for the standby power to form a close circuit with the south bridge chip and the SIO chip under control of the first device upon a positive determination and, upon the positive determination, sending a simulated power switch signal to the SIO chip.

### BRIEF DESCRIPTION OF THE DRAWINGS

To enable persons skilled in the art to gain insight into the structures, features, and effects of use of the present invention, the present invention is hereunder illustrated with preferred embodiments in conjunction with the accompanying drawings, wherein:
FIG. 1 is a schematic view of the framework of an electronic device for reducing power consumption of a computer motherboard according to the present invention; and
FIG. 2 shows a specific embodiment that embodies the spirit, as shown in FIG. 1, of the present invention.

### DETAILED DESCRIPTION OF THE INVENTION

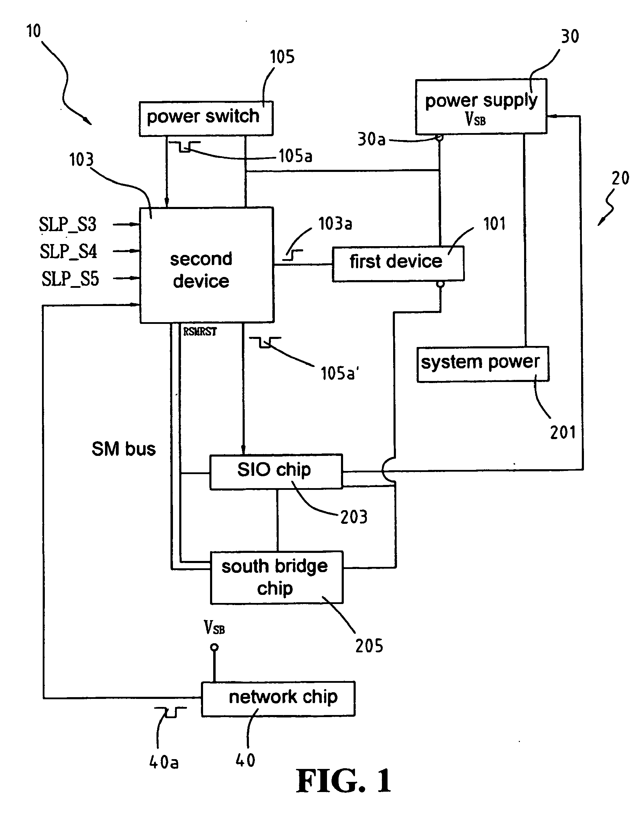

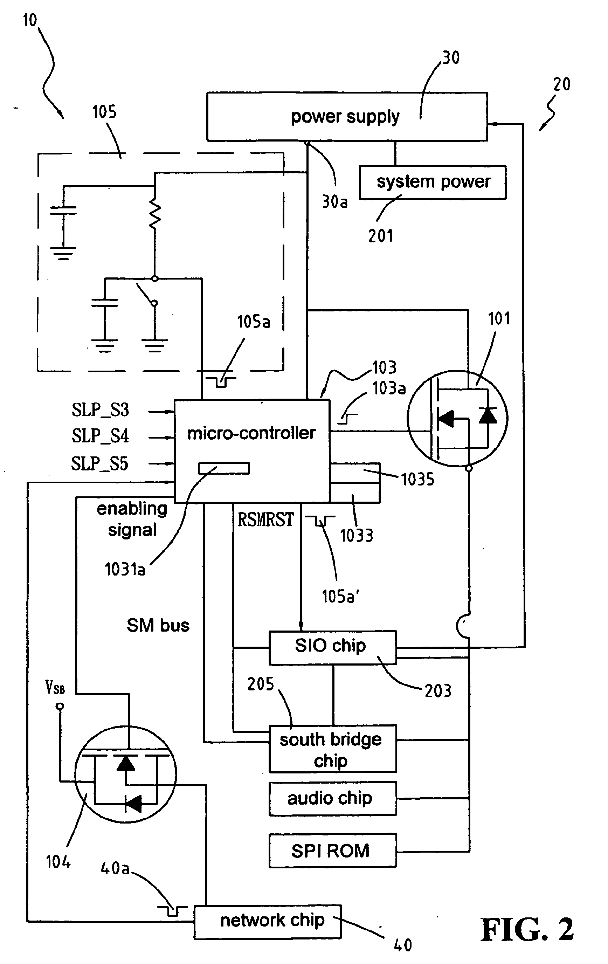

Please refer to FIGs. 1 and 2. To facilitate description of the present invention and let persons skilled in the art gain insight into the present invention, FIGs. 1 and 2 show components of a computer motherboard 20 of the present invention on condition that the components are directly related to the present invention; in other words, irrelevant components of the computer motherboard 20 are omitted from the drawings. An electronic device 10 for reducing power consumption of the computer motherboard 20 allows power supply to the computer motherboard 20 to be maintained rather than interrupted as a means of power-saving processing required for a power-saving state in which a network chip 40 of the computer motherboard 20 is the only operating and thus power-consuming electronic component thereof while power supply to other electronic components of the computer motherboard 20 is interrupted. The computer motherboard 20 is, for example, compatible with Advanced Configuration and Power Interface (ACPI). Persons skilled in the art are well aware that, upon its entry into a power-saving state, a conventional host computer is not effective in power saving, because some of the parts and components of the conventional host computer still consume standby power. For instance, a serial peripheral interface read-only memory (SPI ROM), a network chip (LAN chip), an audio chip, a south bridge chip, and/or a super input output (SIO) chip still consume standby power. By contrast, as disclose in the present invention, after the computer motherboard 20 equipped with the electronic device 10 enters a power-saving state, the electronic device 10 discontinues power supply to a south bridge chip 205 and a super input output (SIO) chip 203. In the situation where the same power source is shared by the south bridge chip 205, the SIO chip 203, a SPI ROM, and an audio chip of the computer motherboard 20, the electronic device 10 discontinues power supply to the SPI ROM and the audio chip as well. Meanwhile, power supply to the electronic device 10 and the network chip 40 of the computer motherboard 20 remains uninterrupted.

Differences in standby power consumption between a conventional computer motherboard and the computer motherboard 20 of the present invention, in a power-saving state, are shown in a comparative table as follows:

| Electronic Parts and Components | Does a conventional computer motherboard consume standby power? | Does the computer motherboard of the present invention consume standby power? |
|---|---|---|
| south bridge chip | yes | no |
| SIO chip | yes | no |
| audio chip | yes | no |
| SPI ROM | yes | no |
| power-saving electronic device 10 | no | yes |
| network chip 40 | yes | yes |

According to the comparative table, the computer motherboard 20 equipped with the electronic device 10 reduces standby power consumption better than the conventional computer motherboard while waiting for receipt of a Wake-on-LAN (WOL) packet.

The electronic device 10 of the present invention comprises a first device 101 and a second device 103, as described in detail hereunder.

Both the electronic device 10 and the network chip 40 of the computer motherboard 20 of the present invention are electrically connected to a standby power 30a from a power supply 30. In an embodiment, the power supply 30 is an ATX power supply or a transformer. In an embodiment, the standby power 30a is a standby power from the ATX power supply, such as a 5V standby power, a 3V standby power, or a 3.3V standby power.

The primary purpose of the first device 101 is to controllably determine whether the standby power 30a at least forms a close circuit or an open circuit with the south bridge chip 205 and the SIO chip 203. The first device 101 is a MOSFET, such as N-MOSFET or P-MOSFET. The second device 103 controls the gate of the MOSFET, so as to controllably determine whether the standby power 30a forms a close circuit or an open circuit with the south bridge chip 205, the SIO chip 203, etc..

For instance, the N-MOSFET features connection of one of a plurality of signal output ends of the second device 103 to the gate, connection of the drain to the standby power 30a, and connection of the source to a plurality of pins of the south bridge chip 205 and the SIO chip 203.

The source of the N-MOSFET is further connected to a plurality of pins of the SPI ROM and the audio chip.

Functions of the second device 103 are described hereunder. The second device 103 has a first function: receiving a power switch signal 105a generated by a power switch 105; and enabling, upon receipt of the power switch signal 105a, the first device 101 to control the standby power 30a so as for the standby power 30a in the control of the first device 101 to form a close circuit with at least the south bridge chip 205 and the SIO chip 203.

In an embodiment, the second device 103 essentially comprises a micro-controller 1031. Upon its receipt of the power switch signal 105a, the micro-controller 1031 sends a conduction control signal 103a to the gate of the N-MOSFET 101 so as to bring the N-MOSFET 101 to an ON state, and in consequence the standby power 30a forms a close circuit with at least the south bridge chip 205 and the SIO chip 203.

Meanwhile, power supply to the SPI ROM and the audio chip resumes.

The second device 103 has a second function: determining whether the computer motherboard 20 is in a power-saving state, such as one of ACPI S3, ACPI S4, ACPI S5, and ACPI G3 (non-mechanical AC Off), so as for the standby power 30a to form an open circuit with at least the south bridge chip 205 and the SIO chip 203 under the control of the first device 101 upon a positive determination. Please note that power supply to the network chip 40 is maintained rather than interrupted.

An embodiment of the second function of the second device 103 is described hereunder. The micro-controller 1031 receives signals, such as SLP_S3 or SLP_S5, from the south bridge chip 205 so as to determine whether the computer motherboard 20 is in ACPI S3 state, and, upon a positive determination, instructs the N-MOSFET 101 to hibernate so as for the standby power 30a to form an open circuit with at least the south bridge chip 205 and the SIO chip 203.

In addition, both the SPI ROM and the audio chip form an open circuit with the standby power 30a.

The second device 103 has a third function: after receiving the power switch signal 105a, the second device 103 reproduces the power switch signal 105a and sends a power switch signal 105a' thus reproduced to the SIO chip 203 of the computer motherboard 20.

The second device 103 has a fourth function: after receiving a signal 40a from the network chip 40, the second device 103 sends the power switch signal 105a' simulating the power switch signal 105a to the SIO chip 203 of the computer motherboard 20 so as to enable startup of the computer motherboard 20.

The signal 40a is, for example, a power management event (PME) signal or a wakeup event signal.

An embodiment of the third function and the fourth function of the second device 103 is described hereunder. Upon receipt of the power switch signal 105a or the signal 40a by the micro-controller 1031, a built-in power switch signal reproducing circuit (not shown) provided in the micro-controller 1031 reproduces the power switch signal 105a and sends the power switch signal 105a' thus reproduced to the SIO chip 203 of the computer motherboard 20. Alternatively, upon its receipt of the power switch signal 105a or the signal 40a, the micro-controller 1031 executes a program to control the voltage level at an output port of the micro-controller 1031 so as for the thus-reproduced power switch signal 105a' to be sent from the output port to the SIO chip 203 of the computer motherboard 20.

The computer motherboard 20 which have received power from the standby power 30a generates signal RSMRST (the signal RSMRST is, for example, generated by the second device 103 or the SIO chip 203) and sends the signal RSMRST to the south bridge chip 205. The second device 103 awaits during a predetermined period of time, that is, the time the second device 103 takes to wait for completion of generation of the signal RSMRST by the computer motherboard 20, such as 100ms.

After bringing the N-MOSFET 101 to an ON state, the micro-controller 1031 awaits for a predetermined period of time, that is, 100ms. At the end of the predetermined period of 100ms (that is, the moment when the computer motherboard 20 has finished generating the signal RSMRST), the micro-controller 1031 generates the power switch signal 105a' and sends the power switch signal 105a' thus generated to the SIO chip 203. Upon receipt of the power switch signal 105a' by the SIO chip 203, the computer motherboard 205 executes Wake-on-LAN function and restoring SO state.

The N-MOSFET in the power on state is likely to be overloaded and burned out when subjected to instantaneous overcurrent. To avoid the mishap, the present invention discloses a soft start circuit unit 1033. The soft start circuit unit 1033 is a conventional circuit.

To increase a control voltage with a view to using low-cost field-effect transistors (FET), the present invention discloses a charge pump circuit unit 1035. The charge pump circuit unit 1035 is a conventional circuit.

In an embodiment, the second device 103 of the present invention is an application-specific integrated circuit (ASIC).

Referring to FIG. 2, the second device 103 causes an electronic switch 104 to enter an ON state by sending an enabling signal to the electronic switch 104, and in consequence the standby power 30a is electrically connected to the network chip 40. Also, the second device 103 is capable of maintaining or discontinuing power supply to the network chip 40.

In an embodiment, the south bridge chip 205, the SIO chip 203, and the network chip 40 are conventional components.

The network chip 40 is a conventional LAN network chip or a conventional wireless network chip. The network chip 40 is replaceable with a 1394 communication chip.

The south bridge chip 205 is replaceable with a platform controller hub (PCH).

In an embodiment, the electronic device 10 is provided on the computer motherboard 20. In another embodiment, the electronic device 10 is integrated into the SIO chip 203 of the computer motherboard 20.

In an embodiment, a system power 201 is a power source of an ATX power source interface (connector) for use with the computer motherboard 20, and the ATX power source interface is connected to the power supply 30 via a power-line cable.

A built-in memory 1031 a of the micro-controller 1031 functions as firmware. A code required for execution of the first, second, third, and fourth functions of the second device 103 is stored in the built-in memory 1031 a. The micro-controller 1031 is connected to the south bridge chip 205 via an SM bus; hence, new firmware for the micro-controller 1031 is updated via the SM bus.

The present invention provides an electronic device for allowing a computer motherboard to discontinue power supply to at least a south bridge chip and a SIO chip in a power-saving state and yet leaving the Wake-on-LAN function of the computer motherboard unaffected, which is the most important feature and advantage of the present invention.

The above description serves to expound preferred embodiments of the present invention rather than limit the scope of application of the present invention. Persons skilled in the art should be able to make obvious changes or modification of the present invention without departing from the substantive disclosure of the present invention.

## Claims

1. An electronic device (10) for reducing power consumption of a computer motherboard (20) having a network chip (40) electrically connected to a standby power (30a) originating from a power source (30), comprising:
a first device (101) controlled by a second device (103) and configured to controllably determine whether the standby power forms a close circuit or an open circuit with a south bridge chip (205) and a super input output (SIO) chip (203) of the computer motherboard;
and
the second device for receiving signals from the south bridge chip so as to determine whether the computer motherboard is in a power-saving state so as for the standby power to form an open circuit with the south bridge chip and the SIO chip under the control of the first device upon a positive determination, and for determining whether the computer motherboard receives a signal from the network chip so as for the standby power to form a close circuit with the south bridge chip and the SIO chip under control of the first device upon a positive determination and, upon the positive determination, sending a simulated power switch signal to the SIO chip so as to enable startup of the computer motherboard.

2. The electronic device of claim 1, wherein the power source is one of a power supply and a transformer.

3. The electronic device of claim 1, further comprising a platform controller hub (PCH) for replacing the south bridge chip.

4. The electronic device of claim 1, wherein the network chip is one of a LAN network chip and a wireless network chip.

5. The electronic device of claim 1, further comprising a 1394 communication chip for replacing the network chip.

6. The electronic device of claim 1, wherein the signal from the network chip is one of a power management event (PME) signal and a wakeup event signal.

7. The electronic device of claim 1, further comprising a charge pump circuit unit.

8. The electronic device of claim 1, further comprising a soft start circuit unit.

9. The electronic device of claim 1, wherein the second device is a micro-controller or an application-specific integrated circuit (ASIC).

10. A computer motherboard (20), comprising:
a network chip (40) electrically connected to a standby power (30a) originating from a power source (30);
a south bridge chip (205) electrically connected to a first device (101);
a super input output (SIO) chip (203) electrically connected to the first device;
the first device controlled by a second device (103) and configured to controllably determine whether the standby power forms a close circuit or an open circuit with the south bridge chip and the SIO chip; and
the second device for receiving signals from the south bridge chip so as to determine whether the computer motherboard is in a power-saving state so as for the standby power to form an open circuit with the south bridge chip and the SIO chip under the control of the first device upon a positive determination, and for determining whether the computer motherboard receives a signal from the network chip so as for the standby power to form a close circuit with the south bridge chip and the SIO chip under control of the first device upon a positive determination and, upon the positive determination, sending a simulated power switch signal to the SIO chip.

11. The computer motherboard of claim 10, wherein the power source is one of a power supply and a transformer.

12. The computer motherboard of claim 10, further comprising a platform controller hub (PCH) for replacing the south bridge chip.

13. The computer motherboard of claim 10, wherein the network chip is one of a LAN network chip and a wireless network chip.

14. The computer motherboard of claim 10, further comprising a 1394 communication chip for replacing the network chip.

15. The computer motherboard of claim 10, wherein the signal from the network chip is one of a power management event (PME) signal and a wakeup event signal.

16. The computer motherboard of claim 10, further comprising a charge pump circuit unit.

17. The computer motherboard of claim 10, further comprising a soft start circuit unit.

18. The computer motherboard of claim 10, wherein the second device is a micro-controller or an application-specific integrated circuit (ASIC).

## Patentansprüche

1. Eine elektronische Vorrichtung (10) zum Reduzieren eines Stromverbrauchs einer Rechner-Hauptplatine (20), wobei die Rechner-Hauptplatine (20) einen Netzwerk-Chip (40) aufweist, welcher elektrisch mit einem Bereitschafts-Strom (30a), welcher von einem Energiequelle (30) stammt, verbunden ist, aufweisend:
eine erste Vorrichtung (101), welche von einer zweiten Vorrichtung (103) gesteuert wird, und derart eingerichtet ist, dass gesteuert ermittelt wird, ob der Bereitschafts-Strom mit einem Süd-Brücken-Chip (engl.: south bridge chip) (205) und einem Super-Ein/Ausgabe-(SIO)-Chip (203) der Rechner-Hauptplatine einen geschlossenen Schaltkreis oder offenen Schaltkreis bildet; und
die zweite Vorrichtung zum Empfangen von Signalen von dem Süd-Brücken-Chip derart, dass ermittelt wird, ob die Rechner-Hauptplatine in einem Energiespar-Zustand ist, derart, dass bei positivem Ermitteln der Bereitschafts-Strom mit dem Süd-Brücken-Chip und dem SIO-Chip unter der Steuerung der ersten Vorrichtung einen offenen Schaltkreis bildet, und derart, dass bei positivem Ermitteln ermittelt wird, ob die Rechner-Hauptplatine ein Signal von dem Netzwerk-Chip empfängt, derart, dass der Bereitschafts-Strom mit dem Süd-Brücken-Chip und dem SIO-Chip unter der Steuerung der ersten Vorrichtung einen geschlossenen Schaltkreises bildet, und bei positivem Ermitteln, Senden eines simulierten Strom-Schalt-Signals zu dem SIO-Chip zum Aktivieren eines Hochfahrens der Rechner-Hauptplatine.

2. Die elektronische Vorrichtung gemäß Anspruch 1, wobei die Energiequelle ein Netzteil oder ein Transformator ist.

3. Die elektronische Vorrichtung gemäß Anspruch 1, ferner aufweisend
einen Plattform-Steuerung-Knotenpunkt (PCH) zum Ersetzen des Süd-Brücken-Chips.

4. Die elektronische Vorrichtung gemäß Anspruch 1,
wobei der Netzwerk-Chip ein LAN-Netzwerk-Chip oder ein Drahtlos-Netzwerk-Chip ist.

5. Die elektronische Vorrichtung gemäß Anspruch 1, ferner aufweisend
einen 1394 Kommunikations-Chip zum Ersetzen des Netzwerk-Chips.

6. Die elektronische Vorrichtung gemäß Anspruch 1, wobei das Signal von dem Netzwerk-Chip ein Energie-Verwaltung-Ereignis-(PME)-Signal oder ein Weck-Ereignis-Signal ist.

7. Die elektronische Vorrichtung gemäß Anspruch 1, ferner aufweisend
eine Ladungspumpen-Schaltkreis-Einheit.

8. Die elektronische Vorrichtung gemäß Anspruch 1, ferner aufweisend
eine Sanftanlauf-Schaltkreis-Einheit.

9. Die elektronische Vorrichtung gemäß Anspruch 1,
wobei die zweite Vorrichtung ein Mikrokontroller oder ein Anwendungs-spezifischer integrierter Schaltkreis (ASIC) ist.

10. Eine Rechner-Hauptplatine (20), aufweisend:
einen Netzwerk-Chip (40), welcher elektrisch mit einem Bereitschafts-Strom (30a), welcher von einer Energiequelle (30) stammt, verbunden ist;
einen Süd-Brücken-Chip (engl.: south bridge chip) (205), welcher mit einer ersten Vorrichtung (101) elektrisch verbunden ist;
einen Super-Ein/Ausgabe-(SIO)-Chip (203), welcher elektrisch mit der ersten Vorrichtung verbunden ist;
die erste Vorrichtung, welche von einer zweiten Vorrichtung (103) gesteuert wird und derart eingerichtet ist, dass gesteuert ermittelt wird, ob der Bereitschafts-Strom mit dem Süd-Brücken-Chip und dem SIO-Chip einen geschlossenen Schaltkreis oder einen offenen Schaltkreis bildet; und
die zweite Vorrichtung zum Empfangen von Signalen von dem Süd-Brücken-Chip derart, dass ermittelt wird, ob die Rechner-Hauptplatine in einem Energiespar-Zustand ist, derart, dass bei positivem Ermitteln der Bereitschafts-Strom mit dem Süd-Brücken-Chip und dem SIO-Chip unter der Steuerung der ersten Vorrichtung einen offenen Schaltkreis bildet, und derart, dass bei positivem Ermitteln ermittelt wird, ob die Rechner-Hauptplatine ein Signal von dem Netzwerk-Chip empfängt, derart, dass der Bereitschafts-Strom mit dem Süd-Brücken-Chip und dem SIO-Chip unter der Steuerung der ersten Vorrichtung einen geschlossenen Schaltkreises bildet und bei positivem Ermitteln, Senden eines simulierten Strom-Schalt-Signals zu dem SIO-Chip zum Aktivieren eines Hochfahrens der Rechner-Hauptplatine.

11. Die Rechner-Hauptplatine gemäß Anspruch 10,
wobei die Energiequelle ein Netzteil oder ein Transformator ist.

12. Die Rechner-Hauptplatine gemäß Anspruch 10, ferner aufweisend
einen Plattform-Steuerung-Knotenpunkt (PCH) zum Ersetzen des Süd-Brücken-Chips.

13. Die Rechner-Hauptplatine gemäß Anspruch 10,
wobei der Netzwerk-Chip ein LAN-Netzwerk-Chip oder ein Drahtlos-Netzwerk-Chip ist.

14. Die Rechner-Hauptplatine gemäß Anspruch 10, ferner aufweisend
einen 1394 Kommunikations-Chip zum Ersetzen des Netzwerk-Chips.

15. Die Rechner-Hauptplatine gemäß Anspruch 10, wobei das Signal von dem Netzwerk-Chip ein Energie-Verwaltung-Ereignis-(PME)-Signal oder ein Weck-Ereignis-Signal ist.

16. Die Rechner-Hauptplatine gemäß Anspruch 10, ferner aufweisend
eine Ladungspumpen-Schaltkreis-Einheit.

17. Die Rechner-Hauptplatine gemäß Anspruch 10, ferner aufweisend
eine Sanftanlauf-Schaltkreis-Einheit.

18. Die Rechner-Hauptplatine gemäß Anspruch 10,
wobei die zweite Vorrichtung ein Mikrokontroller oder ein Anwendungs-spezifischer integrierter Schaltkreis (ASIC) ist.

## Revendications

1. Dispositif électronique (10) destiné à réduire la consommation d'énergie d'une carte mère d'ordinateur (20) présentant une puce de réseau (40) connectée électriquement à une alimentation de secours (30a) provenant d'une source d'énergie (30), comprenant :
un premier dispositif (101) commandé par un second dispositif (103) et configuré pour déterminer de façon commandable si l'alimentation de secours forme un circuit fermé ou un circuit ouvert avec une puce de contrôleur d'entrée-sortie (205) et une puce de super entrée-sortie (SIO) (203) de la carte mère d'ordinateur ;
et
le second dispositif destiné à recevoir des signaux en provenance de la puce de contrôleur d'entrée-sortie, afin de déterminer si la carte mère d'ordinateur se trouve dans un état d'économie d'énergie de façon à ce que l'alimentation de secours forme un circuit ouvert avec la puce de contrôleur d'entrée-sortie et la puce SIO sous la commande du premier dispositif lors d'une détermination positive, et de déterminer si la carte mère d'ordinateur reçoit un signal en provenance de la puce de réseau de façon à ce que l'alimentation de secours forme un circuit fermé avec la puce de contrôleur d'entrée-sortie et la puce SIO sous la commande du premier dispositif lors d'une détermination positive et, lors de la détermination positive,
d'envoyer un signal de commutation d'alimentation simulée à la puce SIO afin de permettre la mise en route de la carte mère d'ordinateur.

2. Dispositif électronique selon la revendication 1, dans lequel la source d'énergie est l'une d'une alimentation et d'un transformateur.

3. Dispositif électronique selon la revendication 1, comprenant en outre un contrôleur d'entrée-sortie (PCH) destiné à remplacer la puce de contrôleur d'entrée-sortie.

4. Dispositif électronique selon la revendication 1, dans lequel la puce de réseau est l'une d'une puce de réseau de réseau LAN et d'une puce de réseau sans fil.

5. Dispositif électronique selon la revendication 1, comprenant en outre une puce de communication 1394 destinée à remplacer la puce de réseau.

6. Dispositif électronique selon la revendication 1, dans lequel le signal en provenance de la puce de réseau est l'un d'un signal d'événement de gestion d'alimentation (PME) et d'un signal d'événement d'activation.

7. Dispositif électronique selon la revendication 1, comprenant en outre une unité de circuit de pompe à charge.

8. Dispositif électronique selon la revendication 1, comprenant en outre une unité de circuit de démarrage sans appel de courant.

9. Dispositif électronique selon la revendication 1, dans lequel le second dispositif est un microcontrôleur ou un circuit intégré à application spécifique (ASIC).

10. Carte mère d'ordinateur (20) comprenant :
une puce de réseau (40) connectée électriquement à une alimentation de secours (30a) provenant d'une source d'énergie (30) ;
une puce de contrôleur d'entrée-sortie (205) connectée électriquement à un premier dispositif (101) ;
une puce de super entrée-sortie (SIO) (203) connectée électriquement au premier dispositif ;
le premier dispositif étant commandé par un second dispositif (103) et configuré pour déterminer de façon commandable si l'alimentation de secours forme un circuit fermé ou un circuit ouvert avec la puce de contrôleur d'entrée-sortie et la puce SIO ; et
le second dispositif étant destiné à recevoir des signaux en provenance de la puce de contrôleur d'entrée-sortie, afin de déterminer si la carte mère d'ordinateur se trouve dans un état d'économie d'énergie de façon à ce que l'alimentation de secours forme un circuit ouvert avec la puce de contrôleur d'entrée-sortie et la puce SIO sous la commande du premier dispositif lors d'une détermination positive, et de déterminer si la carte mère d'ordinateur reçoit un signal en provenance de la puce de réseau de façon à ce que l'alimentation de secours forme un circuit fermé avec la puce de contrôleur d'entrée-sortie et la puce SIO sous la commande du premier dispositif lors d'une détermination positive et, lors de la détermination positive, d'envoyer un signal de commutation d'alimentation simulée à la puce SIO.

11. Carte mère d'ordinateur selon la revendication 10, dans laquelle la source d'énergie est l'une d'une alimentation et d'un transformateur.

12. Carte mère d'ordinateur selon la revendication 10, comprenant en outre un contrôleur d'entrée-sortie (PCH) destiné à remplacer la puce de contrôleur d'entrée-sortie.

13. Carte mère d'ordinateur selon la revendication 10, dans laquelle la puce de réseau est l'une d'une puce de réseau de réseau LAN et d'une puce de réseau sans fil.

14. Carte mère d'ordinateur selon la revendication 10, comprenant en outre une puce de communication 1394 destinée à remplacer la puce de réseau.

15. Carte mère d'ordinateur selon la revendication 10, dans laquelle le signal en provenance de la puce de réseau est l'un d'un signal d'événement de gestion d'alimentation (PME) et d'un signal d'événement d'activation.

16. Carte mère d'ordinateur selon la revendication 10, comprenant en outre une unité de circuit de pompe à charge.

17. Carte mère d'ordinateur selon la revendication 10, comprenant en outre une unité de circuit de démarrage sans appel de courant.

18. Carte mère d'ordinateur selon la revendication 10, dans laquelle le second dispositif est un microcontrôleur ou un circuit intégré à application spécifique (ASIC).
